(19) Europäisches Patentamt
European Patent Office
Office européen des brevets

(11) **EP 2 552 068 B1**

(12) **EUROPEAN PATENT SPECIFICATION**

(45) Date of publication and mention
of the grant of the patent:
**12.02.2014 Bulletin 2014/07**

(51) Int Cl.:
*H04L 25/03* *(2006.01)*    *H04L 27/26* *(2006.01)*
*H04B 3/32* *(2006.01)*

(21) Application number: **11305983.6**

(22) Date of filing: **28.07.2011**

(54) **Signal delaying for compensating for a group delay difference between direct and crosstalk signals**

Signalverzögerung zur Kompensation eines Gruppenverzögerungsunterschieds zwischen Direkt- und Übersprechsignalen

Ralentissement de signal pour compenser une différence de retardement temporel de groupe entre des signaux directs et des signaux de diaphonie

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.01.2013 Bulletin 2013/05**

(73) Proprietor: **Alcatel Lucent**
**75007 Paris (FR)**

(72) Inventors:
• **Vanderhaegen, Dirk**
**1780 Wemmel (BE)**

• **Van Bruyssel, Danny**
**2820 Bonheiden (BE)**

(74) Representative: **ALU Antw Patent Attorneys**
**Intellectual Property and Standards**
**Copernicuslaan 50**
**2018 Antwerp (BE)**

(56) References cited:
**DE-A1-102006 041 454    US-A1- 2009 296 865**
**US-A1- 2011 075 834**

**Description**

**Technical Field of the Invention**

The present invention relates to a transmission arrangement for connecting subscriber devices through a loop plant.

**Technical Background of the Invention**

Crosstalk (or inter-channel interference) is a major source of channel impairment for Multiple Input Multiple Output (MIMO) communication systems, such as Digital Subscriber Line (DSL) communication systems.

As the demand for higher data rates increases, DSL systems are evolving toward higher frequency bands, wherein crosstalk between neighboring transmission lines (that is to say, transmission lines that are in close vicinity such as twisted copper pairs in a cable binder) is more pronounced (the higher frequency, the more coupling).

A MIMO system can be described by the following linear model:

$$\mathbf{Y}(f)=\mathbf{H}(f)\mathbf{X}(f)+\mathbf{Z}(f) \quad (1),$$

wherein the N-component complex vector X, respectively Y, denotes a discrete frequency representation of the symbols transmitted over, respectively received from, the N channels, wherein the NxN complex matrix H is referred to as the channel matrix: the (i,j)-th component of the channel matrix H describes how the communication system produces a signal on the i-th channel output in response to a symbol being transmitted to the j-th channel input; the diagonal elements of the channel matrix describe direct channel coupling, and the off-diagonal elements of the channel matrix describe inter-channel coupling (also referred to as crosstalk coefficients),

and wherein the N-component complex vector Z denotes additional noise present over the N channels, such as Radio Frequency Interference (RFI), thermal noise and alien interference.

Different strategies have been developed to mitigate crosstalk and to maximize effective throughput, reach and line stability. These techniques are gradually evolving from static or dynamic spectral management techniques to multi-user signal coordination (or vectoring).

One technique for reducing inter-channel interference is joint signal precoding: the transmit data symbols are jointly passed through a precoding matrix before being transmitted over the respective communication channels. The precoding matrix is such that the concatenation of the precoder and the communication channel results in little or no interference at the receiver. This is achieved by adding to the original signal an anti-phase signal that is the inverse of an estimate of the aggregate crosstalk signal.

A further technique for reducing inter-channel interference is joint signal post-processing: the received data symbols are jointly passed through a crosstalk cancellation matrix before being detected. The crosstalk cancellation matrix is such that the concatenation of the post-coder and the communication channel results in little or no interference at the receiver. This is achieved by subtracting from the received signal an estimate of the aggregate crosstalk signal.

Signal precoding is particularly suited for downstream communication (towards customer premises), while signal 1 post-processing is particularly suited for upstream communication (from customer premises). Either technique is often referred to as signal vectoring.

Signal vectoring is typically performed at a traffic aggregation point, whereat all the data symbols that are to be concurrently transmitted and/or received are available. For instance, signal vectoring is advantageously performed within a Digital Subscriber Line Access Multiplexer (DSLAM).

The choice of the vectoring group, that is to say the set of communication lines, the signals of which are jointly processed, is rather critical for achieving good crosstalk cancellation performances. Within that group, each communication line is considered as a disturbing line inducing crosstalk into the other communication lines of the group, and the same communication line is considered as a victim line receiving crosstalk from the other communication lines of the group. crosstalk from lines that do not belong to the vectoring group is treated as alien noise and is not canceled.

Ideally, the vectoring group should match the whole set of communication lines that physically and noticeably interact with each other. Yet, limited vectoring capabilities and/or specific network topologies may prevent such an exhaustive approach, in which case the vectoring group would include a subset only of all the physically interacting lines, thereby yielding limited crosstalk cancellation performances.

The performance of signal vectoring depends critically on the component values of the precoding or cancellation matrix, which component values are to be computed and updated according to the actual and varying crosstalk impairing the respective communication channels.

A prior art method for estimating the crosstalk coefficients comprises the steps of:

- simultaneously transmitting a plurality of mutually orthogonal crosstalk pilot sequences over respective ones of a plurality of disturber channels,
- measuring errors induced over a victim channel while the pilot sequences are being transmitted,
- correlating the error measurements with respective ones of the plurality of crosstalk pilot sequences, thereby yielding a plurality of correlated error measurements,
- estimating the crosstalk coefficients from the plurality of disturber channels into the victim channel based on respective ones of the plurality of correlated error measurements.

That is, transceiver units send downstream or upstream pilot sequences. Error samples, measuring both interference and noise over the victim channel, are fed back to a vectoring controller. The error samples are correlated with a given pilot sequence in order to obtain the crosstalk contribution from a specific line. To reject the crosstalk contribution from the other lines, the pilot sequences are made orthogonal, for instance by using walsh-Hadamard sequences comprising '+1' and '-1' anti-phase symbols. The crosstalk estimates are used for updating the precoding or cancellation matrix. The process can be repeated as needed to obtain more and more accurate estimates.

This prior art method has been adopted by the International Telecommunication Union (ITU) for use with VDSL2 transceivers, and is described in the recommendation entitled "Self-FEXT cancellation (vectoring) For Use with VDSL2 Transceivers", ref. G.993.5 (04/2010).

In this recommendation, the pilot signals are sent on the so-called SYNC symbols, which occur periodically after every 256 DATA symbols.

On a given disturber line, a representative subset of the active carriers (or tones) of the SYNC symbol are 4-QAM modulated by the same pilot digit from a given pilot sequence, and thus all transmit one of two complex constellation points, either '1 + j' corresponding to '+1', or '-1 - j' corresponding to '-1'. The remaining carriers of the SYNC symbol keeps on carrying the typical SYNC-FLAG for On-Line Reconfiguration (OLR) message acknowledgment.

On a given victim line, error samples, which comprise both the real and imaginary part of the frequency error on a per tone or group-of-tones basis quantized with a certain number of bits (typically 16), are measured and reported for a specific SYNC symbol to the vectoring controller for further crosstalk estimation.

In G.993.5, it is further assumed that the access node transmits and receives the SYNC symbols over the vectored lines synchronously (super frame alignment) so as pilot signal transmission and interference measurements are carried out simultaneously over the respective transmission lines.

A further prior art method for estimating the crosstalk coefficients comprises the steps of superimposing successive crosstalk probing signals over the disturber or victim line while measuring Signal to Noise and Interference Ratio (SNIR) over the victim line, and estimating the crosstalk coefficients from the SNIR measurements.

This alternative method is particularly suited for legacy Customer Premises Equipment (CPE), and is described in Appendix III of ITU G.993.5 recommendation.

A further technical challenge is to perform vectoring on many subscriber lines and on a large number of tones without using excessive amounts of memory.

Using a brute force approach, in a system with N lines, one would store an array of $N^2$ coefficients to represent the precoding or post-processing matrix to be used on a given tone. For a system operating on K tones, the required memory would amount to $N^2K$ coefficients.

For large systems, say with hundreds of lines and thousands of tones, the array is of a significant size. Large hardware costs are incurred to make a system which can store so many coefficients and access them rapidly.

In typical scenarios of interest, the matrices are inverse matrices of channel matrices. The channel matrices themselves are not independent from tone to tone, rather the channel matrix coefficients vary smoothly as a function of the frequency index. In such cases, the desired precoding or post-processing matrix also varies smoothly. This means there is redundancy, and an opportunity to represent the precoding or post-processing matrix with fewer coefficients.

One natural way to make a reduced representation is by interpolation. That is, one stores a relatively small number of coefficients, and then the rest are generated on the fly using interpolation. For example, one can use piecewise constant interpolation. In this approach, given a decimation factor D, one only stores $N^2K/D$ coefficients. The first coefficient matrix is used for the first D tones, then the second coefficient is used for the next D tones, and so on.

For higher accuracy when the coefficients change more rapidly as a function of tone, one can use piecewise linear interpolation. Here, linear interpolation between the first two matrices is used for the first D tones, then linear interpolation between the second and third matrices is used for the second group of D tones, and so on.

The foregoing methods of interpolation can work well enough if the channels are sufficiently slow varying. However, there are cases where these methods do not work well enough. In general, it is the case in topologies where the group delay (or travel time) of the crosstalk signal is different from the group delay of the direct signal. This group delay difference leads to crosstalk channels whose phase changes rapidly from tone to tone. Using piecewise constant orlinear interpolation would lead to large interpolation errors on such channels, and thus poor crosstalk mitigation performances.

A first prior art solution to this problem is to not use interpolation at all, meaning to measure and report interferences for each and every tone.

A second prior art solution is to use interpolation with a lower decimation factor, that is to say to measure and report the crosstalk coefficients on a denser grid of tones.

Considering the number of tones and lines to be jointly processed, both solutions have huge impacts on the memory and bandwidth requirements of both the access node and the CPE.

The following background art, which may be regarded as useful for understanding- the present invention and its relationship to the prior art, is further acknowledged and briefly discussed.

The US patent application entitled "*crosstalk control Using Delayed Post-compensation in a Multi-Channel system*", and published on March 31, 2011 with publication number US2011/0075834, discloses an access node receiving signals over respective first and second channels. The access node processes the signal received over the second channel and an initialization signal associated with the first channel to obtain estimated crosstalk coefficients characterizing crosstalk from the first channel into the second channel. The access node further introduces respective predetermined delays into the respective signals received over the first and second channels, and utilizes the estimated crosstalk coefficients to adjust the signal received over the second channel as delayed by the corresponding predetermined delay in order to compensate for the crosstalk from the first channel into the second channel. The first and second channels typically refer to respective joining and active DSL subscriber lines.

The US patent application entitled "*Method and Apparatus for Providing synchronization in a Multi-Channel Communication System*", and published on December 3, 2009 with publication number US2009/0296865, discloses a multi-channel processing module arranged in series with multiple channels of a communication system. The processing module synchronizes downstream symbols among the channels, and synchronizes downstream symbols for at least a given one of the channels with upstream symbols for that channel. The synchronization of downstream symbols among the channels and the synchronization of downstream symbols for at least the given channel with upstream symbols for that channel are collectively achieved by adjusting downstream and upstream adjustable delay elements associated with respective downlink and uplink signal paths in the multi-channel processing module. The channels may comprise respective subscriber lines of a DSL communication system.

## summary of the Invention

It is an object of the present invention to improve interpolation of crosstalk coefficients for those specific loop plants that exhibit high differential group delay. It is a further object of the present invention to lessen the memory and bandwidth requirements for joint signal processing.

In accordance with a first aspect of the invention, a transmission arrangement for connecting subscriber devices through a loop plant according to claim 1 is provided.

In accordance with another aspect of the invention, a method for connecting subscriber devices through a loop plant is provided according to claim 9.

In one embodiment of the invention, the group delay difference is determined by characterizing a group delay of a crosstalk coupling function between the first and second subscriber lines.

In an alternative embodiment of the invention, the group delay difference is determined from on-the-field audit and/or measurement data.

In one embodiment of the invention, the communication signals are delayed in the digital domain.

In an alternative embodiment of the invention, the communication signals are delayed in the analog domain.

Consider two subscriber lines in a vectoring group where one line first takes a long path (e.g., a long patch cable) and is then merged in a binder with another line that took a short path to get in the binder. The line with the long path will have a higher group delay than the line with the short path. The solution consists of adding to the line with the short path a small additional time offset (or delay), so that the direct and crosstalk signals are perfectly aligned at the beginning of the binder when they start combining together. This delay is rather small (typically smaller than a few microseconds), but it can have a large impact on interpolation performance.

The group delay of the crosstalk coefficient can be characterized so as to figure out what the difference in group delay is between the direct and crosstalk signals.

Alternatively, the group delay difference can be supplied as numerical input. This could for example be a determination based on cable length as known from installation records or acquired from on-the-field audit. Another example is a determination based on on-the-field measurements of wave propagation times, such as Time Domain Reflectometry (TDR) measurements.

This time offset (or delay) could be implemented digitally by delaying the transmit signals by a few time samples (requires little amount of extra memory), or in the analog front end of the transmitter by means of e.g. a bank of delay lines.

The proposed arrangement allows higher tone subsampling, which in turn proportionally reduces the memory and bandwidth requirements of the access node and the CPE.

The transmission arrangement may form part of an access node. Examples of access nodes according to the invention are a Digital Subscriber Line Access Multiplexer (DSLAM), an Ethernet access bridge, an IP edge router, etc. The access node may reside at a central location (e.g., a central office), or at a remote location closer to subscriber premises (e.g., in a street cabinet).

Alternatively, the determination unit may form part of a network analyzer, in which case the access node is supplied with respective delay values for aligning the communication signals transmitted over the first and second subscriber lines.

**Brief Description of the Drawings**

The above and other objects and features of the invention will become more apparent and the invention itself will be best understood by referring to the following description of an embodiment taken in conjunction with the accompanying drawings wherein:

- fig. 1 represents a loop topology with high-differential group delay,
- fig. 2 represents an access node according to the invention.

**Detailed Description of the Invention**

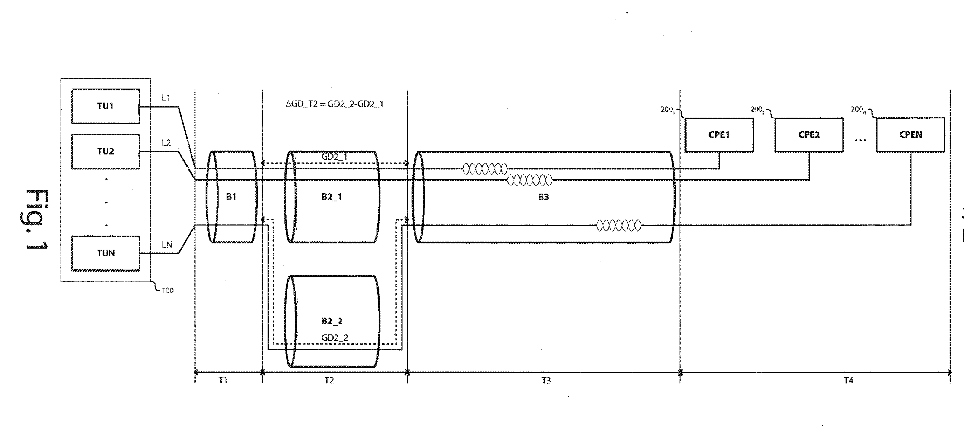

There is seen in fig. 1 a loop plant 1 for providing broadband access to subscribers, and exhibiting high differential group delay for crosstalk signals.

The loop plant 1 comprise N Unshielded Twisted Pairs (UTP) L1 to LN for connecting an access node 100 at a central office to respective ones of N CPEs $200_1$ to $200_N$ at subscriber premises. The access node 100 comprises N transceivers TU1 to TUN for connecting to respective ones of the N subscriber lines L1 to LN.

The loop plant 1 comprises four sections (or parts) T1 to T4. Over the first section T1, the subscriber lines L1 to LN from the access node 100 are bundled together within a short common binder B1. This first section T1 is optional. Over the next section T2, they are dispatched over two different binders B2_1 and B2_2 of different lengths, and thus follow two different routes with respective propagation times GD2_1 and GD2_2. Over the third section T3, the subscriber lines are merged again into one long single binder B3 from the central office up to a distribution point in the neighborhood of the subscriber premises. Over the last section T4, they scatter again for connecting to the respective CPEs 200.

FEXT mostly happens within the third long binder B3 as the subscriber lines are in close vicinity with each other over a long distance. The FEXT signal from a disturber line that goes through the second binder B2_2, and that couples into a victim line going through the first binder B2_1, has a propagation time that is different from the propagation time of the direct signal that travels over the victim line, thereby yielding strong oscillations of Cartesian components of the corresponding crosstalk coefficient across frequency.

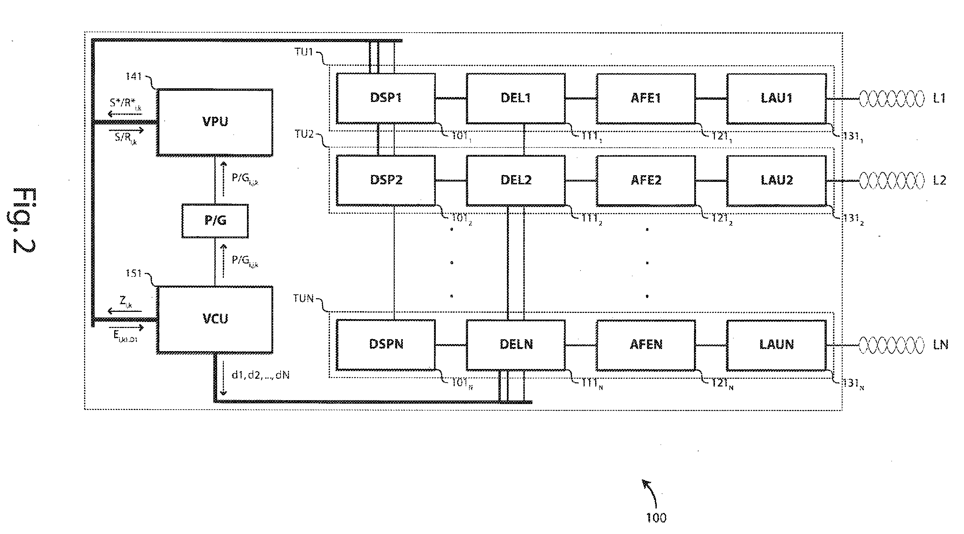

There is seen in fig. 2 further details about the access node 100. As an exemplary embodiment, the access node 100 is a DSLAM comprising the following functional blocks:

- N DSL Digital Signal Processors (DSPs) $101_1$ to $101_N$ (or DSP1 to DSPN),
- N delay units $111_1$ to $111_N$ (or DELL to DELN),
- N Analog Front Ends (AFEs) units $121_1$ to $121_N$ (or AFE1 to AFEN),
- N Line Adaptation Units (LAUs) $131_1$ to $131_N$ (or LAU1 to LAUN),
- a Vectoring Processing Unit (VPU) 141,
- a Vectoring Control Unit (VCU) 151 for controlling the operation of the VPU 141.

The N DSPs 101 are coupled to respective ones of the N delay units 111. The N delay units 111 are further coupled to respective ones of the N AFEs 121. The N AFEs 121 are further coupled to respective ones of the N LAUs 131. The N LAUs 131 are further coupled to respective ones of the N subscriber lines L1 to LN. The DSPs 101 are further coupled to both the VPU 141 and the VCU 151, and the delay units 111 are further coupled to the VCU 151.

The VPU 141 and the VCU 151 can be co-located with the transceivers TU1 to TUN on a single Line Termination (LT) board for board level vectoring, or can form part of a dedicated Printed Board Assembly (PBA) for system level vectoring.

The DSPs 101 are arranged to operate both a downstream and an upstream DSL communication channel.

Basically, each one of the DSPs 101 comprises a transmit part for encoding, modulating and shaping a DSL downstream signal for further transmission over a subscriber line, and a receive part for demodulating, detecting and decoding a DSL upstream signal from a subscriber line.

The following transmit steps are typically performed within the DSPs 101:

- data encoding, such as data multiplexing, framing, scrambling, Reed Solomon (RS) encoding and interleaving,
- signal modulation, comprising the steps of ordering the carriers according to a carrier ordering table, parsing the encoded bit stream according to the bit loadings of the ordered carriers, and mapping each chunk of bits onto an appropriate transmit constellation point (with respective carrier amplitude and phase), possibly with Trellis code Modulation (TCM) encoding,
- signal scaling,
- Inverse Fast Fourier Transform (IFFT)
- Cyclic Prefix (CP) insertion,
- time-windowing.

The following receive steps are typically performed within the DSPs 101:

- time-domain signal equalization,
- Cyclic Prefix (CP) removal,
- Fast Fourier Transform (FFT),
- frequency-domain signal equalization,
- signal de-modulation and detection, comprising the steps of applying to each and every equalized frequency sample an appropriate constellation grid, the pattern of which depends on the respective carrier bit loading, detecting the expected transmit constellation point and the corresponding transmit bit sequence, and re-ordering all the detected chunks of bits according to the carrier ordering table, possibly with TCM decoding,
- data decoding, such as data de-interleaving, RS decoding (byte errors, if any, are corrected during this step), descrambling, frame delineation and de-multiplexing.

Each one of the delay units 111 is configured to delay the transmit signal by a certain amount of time, expressed as a number of time samples. The delay units 111 can be implemented by means of e.g. shift registers synchronized on the sampling clock.

Each one of the AFE 121 comprises a Digital-to-Analog Converter (DAC) and an Analog-to-Digital Converter (ADC), transmit and receive filters for confining the signal energy within the appropriate communication frequency bands while rejecting out-of-band interferences, a Line Driver (LD) for amplifying the transmit signal and for driving the transmission line, and a Low Noise Amplifier (LNA) for amplifying the receive signal with as little noise as possible.

Each one of the LAU 131 comprises a hybrid for coupling the transmitter output to the transmission line and the transmission line to the receiver input while achieving low transmitter-receiver coupling ratio (e.g., by means of echo cancellation techniques), further transmit and receive high-pass filters for filtering out any unwanted signals present in the Plain Old Telephony service (POTS) or Integrated Services Digital Network (ISDN) frequency bands, impedance-matching circuitry for adapting to the characteristic impedance of the line, and isolation circuitry (typically a transformer).

The subscriber lines L1 to LN induce crosstalk into each other as they are in close vicinity over whole or part of their length. The subscriber lines L1 to LN are assumed to form part of the same vectoring group.

For DSL deployment, crosstalk mostly reduces to Far-End crosstalk (FEXT) as downstream and upstream communications use distinct and non-overlapping frequency bands. With FEXT, some substantial amount of the signal transmitted by a transceiver (the disturber) couples into a neighboring line and impairs reception of the direct signal transmitted over that neighboring line at a remote transceiver (the victim). For instance, the downstream signal transmitted by the access node 100 over line L1 couples into line L2 and is detected as noise by the CPE $200_2$. Also, the upstream signal transmitted by the CPE $200_2$ over line L2 couples into line L1 and is detected as noise by the transceiver TU1.

The DSPs 101 are further configured to supply transmit frequency-domain samples to the VPU 141 before Inverse Fast Fourier Transform (IFFT) step for joint signal precoding, and to supply receive frequency-domain samples to the VPU 141 after Fast Fourier Transform (FFT) step for joint signal post-processing.

The DSPs 101 are further configured to receive corrected frequency-domain samples from the VPU 141 for further transmission or detection. Alternatively, the DSPs 101 may receive correction samples to add to the initial frequency-domain samples before further transmission or detection.

The VPU 141 is configured to mitigate the crosstalk induced over the transmission lines L1 to LN. This is achieved by multiplying a vector **S** of transmit frequency-domain samples with a precoding matrix **P** so as to compensate for an estimate of the coming crosstalk (downstream), or by multiplying a vector **R** of receive frequency-domain samples with a crosstalk cancellation matrix **G** so as to cancel an estimate of the incurred crosstalk (upstream).

Let i denotes a line index ranging from 1 to N, k a frequency index ranging from 0 to K-1, and l a Discrete Multi-Tone (DMT) symbol index.

Let $S^1_{i,k}$ and $S^{*1}_{i,k}$ denote the transmit frequency-domain samples transmitted over line Li during DMT symbol l before and after crosstalk pre-compensation by the VPU 141 respectively.

Similarly, let $R^1_{i,k}$ and $R^{*1}_{i,k}$ denote the receive frequency-domain samples received from line Li during DMT symbol 1 before and after crosstalk cancellation respectively.

We have:

$$\mathbf{S}^{*1}_k = \begin{bmatrix} S^{*1}_{1,k} \\ S^{*1}_{2,k} \\ \vdots \\ S^{*1}_{N,k} \end{bmatrix} = \mathbf{P}_k \cdot \mathbf{S}^1_k = \begin{bmatrix} 1 & P_{1,2,k} & \cdots & & P_{1,N,k} \\ P_{2,1,k} & 1 & & & \vdots \\ \vdots & & & & P_{N-1,N,k} \\ P_{N,1,k} & \cdots & P_{N,N-1,k} & & 1 \end{bmatrix} \begin{bmatrix} S^1_{1,k} \\ S^1_{2,k} \\ \vdots \\ S^1_{N,k} \end{bmatrix} \quad (2),$$

and

$$\mathbf{R}^{*1}_k = \begin{bmatrix} R^{*1}_{1,k} \\ R^{*1}_{2,k} \\ \vdots \\ R^{*1}_{N,k} \end{bmatrix} = \mathbf{G}_k \cdot \mathbf{R}^1_k = \begin{bmatrix} 1 & G_{1,2,k} & \cdots & & G_{1,N,k} \\ G_{2,1,k} & 1 & & & \vdots \\ \vdots & & & & G_{N-1,N,k} \\ G_{N,1,k} & \cdots & G_{N,N-1,k} & & 1 \end{bmatrix} \begin{bmatrix} R^1_{1,k} \\ R^1_{2,k} \\ \vdots \\ R^1_{N,k} \end{bmatrix} \quad (3).$$

In the crosstalk mitigation matrix **P** or **G**, a row i represents a particular victim line Li, while a column j represents a particular disturber line Lj. At the intersection, the coupling coefficient that should be applied to the corresponding disturber transmit or receive frequency-domain sample for mitigating over the victim line Li the crosstalk from the disturber line Lj. Not all the coefficients of the matrix need to be determined, for instance on account of limited vectoring capabilities first assigned to the strongest crosstalkers, or still for instance due to the fact that some lines do not noticeably interact with each other. The undetermined coefficients are preferably set to zero.

The VCU 151 is basically for controlling the operation of the VPU 141, and more specifically for initializing or updating the precoding matrix **P** and the cancellation matrix **G**.

The VCU 151 starts first by configuring the respective downstream and upstream pilot sequences to be used over the lines L1 to LN. The pilot sequences are mutually orthogonal pilot sequences of length L. The pilot sequence transmitted over line Li at frequency index k is denoted as $Z_{i,k}$ and comprises L pilot digits $\{Z^1_{i,k}\}$ to be transmitted over L SYNC symbols.

The VCU 151 gathers respective slicer errors as measured during the detection of the SYNC symbols by the remote CPEs 200 for downstream communication, and by the DSPs 101 for upstream communication. The equalized interference measurements carried out over a victim line Li at frequency index k during SYNC symbol index l are denoted as $E^1_{i,k}$.

In order to reduce the amount of error feedback information, interference measurements are only available at frequency indexes k1.D1, wherein D1 denotes a first decimation factor, and k1 denotes a further frequency index ranging from 0 to K/D1-1.

Next, the VCU 151 correlates the interference measurements $E^1_{i,k1.D1}$ as measured over the victim line Li with the respective pilot sequence transmitted over the disturber line Lj so as to obtain an estimate of the equalized crosstalk coefficients H*i,j,k1.D1 (or crosstalk coupling function) from line Lj into line Li at frequency indexes k1.D1, wherein:

$$H^{*}_{i,j,k1.D1} = \frac{H_{i,j,k1.D1}}{H_{i,i,k1.D1}} \quad (4).$$

The VCU 151 is further configured to determine the group delay GDi,j of the equalized crosstalk coefficients H*i,j from line Lj into line Li.

The group delay GDi,j is indicative of any propagation time difference between the direct signal on line Li and the crosstalk signal from line Lj into line Li. If the lines Li and Lj take a common route, then the group delay $GD_{i,j}$ would almost reduce to zero. Yet, if the lines Li and Lj take different routes before being merged together and before noticeably interfering with each other, then the group delay $GD_{i,j}$ is substantially different from zero and is indicative of the propagation time difference between the different routes.

With reference to fig. 1, the group delays of the equalized crosstalk coefficients between the first subset C1 of subscriber lines that go through the binder B2_1 reduces to zero. Similarly, the group delays of the equalized crosstalk coefficients between the second subset C2 of subscriber lines that go through the binder B2_2 also reduces to zero. However, the group delays of the equalized crosstalk coefficients from a line of the second subset C2 into another line of the first subset C1 approximately matches the group delay difference AGD_T2 = GD2_2 - GD2_1 over the second non-interfering section T2.

The group delay $GD_{i,j}$ can be determined by differentiating the phase component (or argument) of the equalized crosstalk coefficients H*i,j with respect to the angular frequency $\omega$:

$$GD_{i,j} = -\frac{d(Arg(H^*_{i,j}(\omega)))}{d\omega} \quad (5).$$

The so-determined group delay GDi,j usually depends on frequency, in which case only the large flat part of the group delay is considered and compensated for.

Alternatively, the group delay GDi,j can be determined by Inverse Fourier transform of the equalized crosstalk coefficients H*i,j back into the time domain, and by determining a time offset at which the dominant energy peak of the envelope of the impulse response occurs.

The sign of the group delay GDi,j is indicative of the line on which the delay is to be applied. If the sign of $GD_{i,j}$ is positive, the signals transmitted over line Li need to be delayed by an amount |GDi,j| with respect to the signals transmitted over line Lj, else the signals transmitted over line Lj need to be delayed by an amount |Gdi,j| with respect to the signals transmitted over line Li.

The VCU 151 is further configured to group the subscriber lines L1 to LN into one or more subsets based on their respective group delay difference.

The VCU 151 starts with a given victim line, say line L1, and next computes the group delays of the equalized crosstalk coefficients $H^*_{1,2}$ to $H^*_{1,N}$ between the disturber lines L2 to LN and the victim line L1. The lines that exhibit no group delay difference with the line L1 are deemed to follow a common route with line L1, and are grouped together with line L1 into one single subset. The process re-iterates with another line, among the remaining lines exhibiting substantial group delay difference with respect to line L1, taken as the reference victim line, and till all the lines have been adequately grouped. Alternatively, the remaining lines that exhibit a non-null yet common group delay difference with respect to line L1 can be directly grouped into another subset. Upon completion, the subscriber lines L1 to LN have been grouped into two or more subsets, with each subset comprising one or more subscriber lines.

To improve the accuracy of the estimation, the group delays of the equalized crosstalk coefficients are averaged over each and every subset. This averaging step is optional.

For instance, still referring to fig. 1:

$$\Delta GD\_T2 = \frac{1}{N1 \times N2} \sum_{i \in C1, j \in C2} GD_{i,j} \quad (6),$$

wherein N1 and N2 denotes the respective sizes of the subsets C1 and C2.

The delay units 111 are then supplied with respective delay values d1 to dN, with one common delay value applying to all the lines of one subset.

Still referring to fig. 1, the signals transmitted over the lines of the first subset C1 (with the short T2 section) are delayed with respect to the signals transmitted over the lines of the second subset C2 (with the long T2 section) by a time amount d = 1 / fs that approximately compensates for the group delay difference ΔGD_T2, fs denoting the sampling frequency, and 1 the required number of delay taps for compensating for the group delay difference AGD_T2 over the second non-interfering section T2. The number 1 of delay taps satisfies any of the following two inequalities:

$$(1-1)/fs \leq |\Delta GD\_T2| \leq 1/fs \quad (7),$$

or

$$1/fs \leq |\Delta GD\_T2| \leq (1+1)/fs \quad (8).$$

By so doing, the direct and crosstalk signals are almost aligned at the beginning of the third interfering section T3 when the subscriber lines L1 to LN are merged all together.

After the delay d is applied on the lines of the subset C1, a new measurement round is triggered as aforementioned so as to estimate the new equalized crosstalk coefficients between the lines L1 to LN.

The new equalized crosstalk coefficients $H^*_{i,j,k1.D1}$ exhibit less oscillations on account of the time-alignment of the direct and crosstalk signals when they start combining together. Consequently, the performances of the interpolation step are greatly improved. The missing equalized crosstalk coefficients $H^*_{i,j,k}$ at intermediary frequency indexes can now be adequately determined by means of interpolation.

A further decimation step may be carried out so as to retain only the crosstalk samples that are necessary to achieve a good balance between interpolation performance and memory savings within the DSLAM 100.

The precoding matrix **P** and the crosstalk cancellation matrix **G** can be accurately computed at each and every tone k, and joint signal processing can be efficiently carried over the loop plant 1 without requiring additional memory and bandwidth for interference measurement and estimation.

In an examplary embodiment (not shown), the delay units are implemented by means of a bank of analog delay lines, and are placed e.g. within the AFE 121 at the output of the transmit filter circuitry.

In still an alternative examplary embodiment of the invention (not shown), a network analyzer gathers on-line interference measurements over the loop plant 1 from the access node 100 and the CPEs 200, or from test or diagnosis equipment. The network analyzer may also use audit and/or measurement data of the loop plant 1 as learned from the field.

The network analyzer then determines whether there exists any non-interfering section with weak crosstalk-coupling that is followed by an interfering section with strong crosstalk coupling, as well as the respective subset to which a line belong. The network analyzer further determines the group delay difference over the non-interfering section

The network analyzer supplies the access node 100 with delay values d1 to dN, expressed as absolute time value or as a number of time samples, to be applied over the respective subscriber lines L1 to LN. A management agent in the access node 100 next configures the delay units 111 with the appropriate delay values d1 to dN.

It is to be noticed that the term 'comprising' should not be interpreted as being restricted to the means listed thereafter. Thus, the scope of the expression 'a device comprising means A and B' should not be limited to devices consisting only of components A and B. It means that the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention which is defined by claims 1-9.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

## Claims

1. **A transmission arrangement** for connecting subscriber devices through **a loop plant** (1), and comprising **first and second transmitters** (TU1, TUN) for transmitting communication signals over first **and second subscriber lines** (L1, LN) respectively, which loop plant comprising **a first non-interfering section** (T2) wherein the first and second transmission lines follow different routes with low crosstalk coupling, followed by a **second interfering section** (T3) wherein the first and second transmission lines follow a common route with crosstalk coupling higher than said low crosstalk coupling,

*wherein* the transmission arrangement further comprises a **determination unit** (151) for determining **a group delay difference** (ΔGD_T2) between the first and second subscriber lines over the first non-interfering section, and **a delay unit** (111) for delaying **first and second communication signals** transmitted over the first and second subscriber lines with respect to each other by **a time amount** (d1) that compensates for the group delay difference.

2. **A transmission arrangement** according to claim 1, *wherein* the group delay difference is determined by characterizing **a group delay** of a **crosstalk coupling function** between the first and second subscriber line.

3. **A transmission arrangement** according to claim 1, *wherein* the group delay difference is determined from on-the-field audit and/or measurement data.

4. **A transmission arrangement** according to claim 1 or 2, *wherein* the delay unit is configured to delay communication signals in the digital domain.

5. **A transmission arrangement** according to claim 1 or 2, *wherein* the delay unit is configured to delay communication signals in the analog domain.

6. **A transmission arrangement** according to any of claims 1 to 4, *wherein* the transmission arrangement forms part of **an access node** (100).

7. **A transmission arrangement** according to claim 6, *wherein* the access node is **a Digital Subscriber Line Access Multiplexer DSLAM** (100).

8. **A transmission arrangement** according to any of claims 1 to 4, *wherein* the determination unit forms part of **a network analyzer,** and wherein the first and second transmitters and the delay unit form part of **an access node** (100).

9. **A method** for connecting subscriber devices through **a loop plant** (1), and comprising the step of transmitting communication signals over **first and second subscriber lines** (L1, LN) respectively, which loop plant comprising **a first non-interfering section** (T2) wherein the first and second transmission lines follow different routes with low crosstalk coupling, followed by **a second interfering section** (T3) wherein the first and second transmission lines follow a common route with crosstalk coupling higher than said low crosstalk coupling,

*wherein* the method further comprises the steps of determining **a group delay difference** (ΔGD_T2) between the first and second subscriber lines over the first non-interfering section, and delaying **first and second communication signals** transmitted over the first and second subscriber lines with respect to each other by **a time amount** (d1) that compensates for the group delay difference.

**Patentansprüche**

1. **Sendeanordnung** zum Verbinden von Teilnehmergeräten über eine **Schleifenanlage** (1), umfassend einen **ersten und einen zweiten Sender** (TU1, TUN) zum Übertragen von Kommunikationssignalen jeweils über eine **erste und eine zweite Teilnehmerleitung** (L1, LN), wobei die Schleifenanlage einen **ersten störungsfreien Abschnitt** (T2) umfasst, wobei die erste und die zweite Übertragungsleitung unterschiedliche Routen mit geringer Übersprechkopplung verfolgen, gefolgt von einem **zweiten störungsbehafteten Abschnitt** (T3), wobei die erste und die zweite Übertragungsleitung eine gemeinsame Route mit höherer Übersprechkopplung als die besagte geringe Übersprechkopplung verfolgen,

*wobei* die Sendeanordnung weiterhin eine **Ermittlungseinheit** (151) zum Ermitteln eines **Gruppenverzögerungsunterschieds** (ΔGD_T2) zwischen der ersten und der zweiten Teilnehmerleitung über den ersten störungsfreien Abschnitt und eine **Verzögerungseinheit** (111) zum Verzögern eines über die erste und die zweite Teilnehmerübertragung übertragenen **ersten und zweiten Kommunikationssignals** in Bezug zueinander um einen **Zeitbetrag** (d1), welcher den Gruppenverzögerungsunterschied kompensiert, umfasst.

2. **Sendeanordnung** nach Anspruch 1, *wobei* der Gruppenverzögerungsunterschied durch Charakterisieren einer **Gruppenverzögerung** einer **Übersprechkopplungsfunktion** zwischen der ersten und der zweiten Teilnehmerleitung ermittelt wird.

3.  **Sendeanordnung** nach Anspruch 1, *wobei* der Gruppenverzögerungsunterschied aus Feldaudit- und/oder Messdaten ermittelt wird.

4.  **Sendeanordnung** nach Anspruch 1 oder 2, *wobei* die Verzögerungseinheit für die Verzögerung von Kommunikationssignalen im digitalen Bereich konfiguriert ist.

5.  **Sendeanordnung** nach Anspruch 1 oder 2, *wobei* die Verzögerungseinheit für die Verzögerung von Kommunikationssignalen im analogen Bereich konfiguriert ist.

6.  **Sendeanordnung** nach einem beliebigen der Ansprüche 1 bis 4, *wobei* die Sendeanordnung Bestandteil eines **Zugangsknotens** (100) ist.

7.  **Sendeanordnung** nach Anspruch 6, *wobei* der Zugangsknoten ein **Digitaler Teilnehmerleitungs-Zugangsmultiplexer DSLAM** (100) ist.

8.  **Sendeanordnung** nach einem beliebigen der Ansprüche 1 bis 4, *wobei* die Ermittlungseinheit Bestandteil eines **Netzwerkanalysators** ist, und wobei der erste und der zweite Sender und die Verzögerungseinheit Bestandteil eines **Zugangsknotens** (100) sind.

9.  **Verfahren** zum Verbinden von Teilnehmergeräten über eine **Schleifenanlage** (1), umfassend den Schritt des Übertragens von Kommunikationssignalen jeweils über eine **erste und eine zweite Teilnehmerleitung** (L1, LN), wobei die Schleifenanlage einen **ersten störungsfreien Abschnitt** (T2) umfasst, wobei die erste und die zweite Übertragungsleitung unterschiedliche Routen mit geringer Übersprechkopplung verfolgen, gefolgt von einem **zweiten störungsbehafteten Abschnitt** (T3), wobei die erste und die zweite Übertragungsleitung eine gemeinsame Route mit höherer Übersprechkopplung als die besagte geringe Übersprechkopplung verfolgen,
    *wobei* das Verfahren weiterhin die Schritte des Ermittelns eines **Gruppenverzögerungsunterschieds** ($\Delta$GD_T2) zwischen der ersten und der zweiten Teilnehmerleitung über den ersten störungsfreien Abschnitt und des Verzögerns eines über die erste und die zweite Teilnehmerübertragung übertragenen **ersten** und **zweiten Kommunikationssignals** in Bezug zueinander um einen **Zeitbetrag** (d1), welcher den Gruppenverzögerungsunterschied kompensiert, umfasst.


**Revendications**

1.  **Agencement de transmission** pour connecter des périphériques d'abonné par l'intermédiaire d'**installations en boucle** (1), et comprenant **un premier et un deuxième émetteurs** (TU1, TUN) pour transmettre des signaux de communication sur **une première et une deuxième lignes d'abonné** (L1, LN) respectivement, lesquelles installations en boucle comprenant **une première section non-brouilleuse** (T2) dans laquelle la première et la deuxième lignes de transmission suivent des chemins différents à couplage de diaphonie bas, suivie **d'une deuxième section brouilleuse** (T3) dans laquelle la première et la deuxième lignes de transmission suivent un chemin commun à couplage de diaphonie supérieur audit couplage de diaphonie bas,
    *dans lequel* l'agencement de transmission comprend en outre une **unité de détermination** (151) pour déterminer **une différence de temps de propagation de groupe** ($\Delta$GD_T2) entre la première et la deuxième lignes d'abonné sur la première section non-brouilleuse, et **un circuit à retard** (111) pour retarder **le premier et le deuxième signaux de communication** transmis sur la première et la deuxième lignes d'abonné l'un par rapport à l'autre selon **une durée** (d1) qui compense la différence de temps de propagation de groupe.

2.  **Agencement de transmission** selon la revendication 1,
    *dans lequel* la différence de temps de propagation de groupe est déterminée en caractérisant **un temps de propagation de groupe** d'une **fonction de couplage de diaphonie** entre la première et la deuxième lignes d'abonné.

3.  **Agencement de transmission** selon la revendication 1,
    *dans lequel* la différence de temps de propagation de groupe est déterminée à partir de l'audit et/ou de données de mesure sur le terrain.

4.  **Agencement de transmission** selon la revendication 1 ou 2,
    *dans lequel* le circuit à retard est configuré pour retarder des signaux de communication dans le domaine numérique.

**5.** **Agencement de transmission** selon la revendication 1 ou 2,
*dans lequel* le circuit à retard est configuré pour retarder des signaux de communication dans le domaine analogique.

**6.** **Agencement de transmission** selon l'une quelconque des revendications 1 à 4, *dans lequel* l'agencement de transmission fait partie d'un **noeud d'accès** (100).

**7.** **Agencement de transmission** selon la revendication 6, dans lequel le noeud d'accès est un **multiplexeur d'accès de ligne d'abonné numérique DSLAM** (100).

**8.** **Agencement de transmission** selon l'une quelconque des revendications 1 à 4, *dans lequel* l'unité de détermination fait partie d'un **analyseur de réseau**, et dans lequel le premier et le deuxième émetteurs et le circuit à retard font partie d'un **noeud d'accès** (100).

**9.** **Procédé** pour connecter des périphériques d'abonné par l'intermédiaire d'**installations en boucle** (1), et comprenant l'étape de transmission de signaux de communication sur **une première et une deuxième lignes d'abonné** (L1, LN) respectivement, lesquelles installations en boucle comprenant **une première section non-brouilleuse** (T2) dans laquelle la première et la deuxième lignes de transmission suivent des chemins différents à couplage de diaphonie bas, suivie **d'une deuxième section brouilleuse** (T3) dans laquelle la première et la deuxième lignes de transmission suivent un chemin commun à couplage de diaphonie supérieur audit couplage de diaphonie bas, *dans lequel* le procédé comprend en outre les étapes de détermination d'**une différence de temps de propagation de groupe** ($\Delta$GD_T2) entre la première et la deuxième lignes d'abonné sur la première section non-brouilleuse, et de retardement d'**un premier et d'un deuxième signaux de communication** transmis sur la première et la deuxième lignes d'abonné l'un par rapport à l'autre selon **une durée** (d1) qui compense la différence de temps de propagation de groupe.

Fig. 1

Fig. 2

**EP 2 552 068 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110075834 A

- US 20090296865 A